# EUROPEAN PATENT SPECIFICATION

(11) **EP 2 077 673 B1**
(45) Date of publication and mention of the grant of the patent: **22.01.2014**
(21) Application number: 06822265.2
(22) Date of filing: 25.10.2006
(51) Int. Cl.: H04W 36/08, H04W 36/00

(54) **WIRELESS COMMUNICATION SYSTEM, RADIO BASE STATION, AND BASE STATION SWITCHING METHOD**
DRAHTLOSES KOMMUNIKATIONSSYSTEM, FUNKBASISSTATION UND BASISSTATION-UMSCHALTVERFAHREN
SYSTÈME DE COMMUNICATION SANS FIL, STATION RADIO FIXE, ET PROCÉDÉ DE COMMUTATION DE STATION DE BASE

(43) Date of publication of application: 08.07.2009
(73) Proprietor: Fujitsu Limited, Kawasaki-shi, Kanagawa 211-8588 (JP)
(72) Inventor: OGUCHI, Naoki, Kawasaki-shi Kanagawa 211-8588 (JP)
(74) Representative: Stebbing, Timothy Charles
(86) International application number: PCT/JP2006/321288
(87) International publication number: WO 2008/050424

(56) References cited:
- EP-A1- 1 524 814
- EP-A1- 1 534 035
- EP-A1- 1 653 681
- EP-A2- 1 594 336
- JP-A- 2003 348 007
- JP-A- 2005 204 341
- JP-A- 2006 067 507
- US-A1- 2006 030 322
- "IEEE Standard for Local and Metropolitan Area Networks Part 16: Air Interface for Fixed and Mobile Broadband Wireless Access Systems Amendment 2: Physical and Medium Access Control Layers for Combined Fixed and Mobile Operation in Licensed Bands and Corrigendum 1;IEEE Std 802.16e-2005 and IEEE Std 8", IEEE STD 802.16E-2005 AND IEEE STD 802.16-2004/COR 1-2005,, 1 January 2006 (2006-01-01), pages 47-48,120, XP002581098,

## Description

### TECHNICAL FIELD

The present invention relates to a radio communication system using radio communication, a radio base station and a base station switching method. The present invention is suitable for, for example a radio communication system to decrease the reconnection time of a handover-target radio base station and a terminal.

### BACKGROUND ART

Generally in a radio communication system, when a terminal (Mobile Station: MS) is passing through a non-arrival area of radio waves, such as a tunnel, radio waves from a radio base station (BS) may not reach the terminal MS, and communication with the radio base station BS may be interrupted. The terminal MS searches for a new radio base station BS when the terminal MS exits the tunnel and enters a state to receive radio waves again, and attempts connection again with this radio base station BS.

However it takes time to restart communication with the radio base station BS, since the terminal MS attempts reconnection after entering a state to receive radio waves from the new radio base station BS. Hence the user using the terminal MS is inconvenienced.

Therefore when a connection of the terminal MS with a connection source radio base station BS (hereafter SBS (Serving Base Station)) is suddenly interrupted, IEEE 802.16e (e.g. Non-patent Document 1) specifies a method for reconnecting a radio base station (the radio base station SBS or a reconnection target radio base station BS (hereafter TBS: Target Base Station)).

By using this method, connection information of the terminal MS is sent from the communication source radio base station SBS to the new reconnection target radio base station TBS, so the processing time for the terminal MS to reconnect to the radio base station TBS can be decreased.

The connection information of the terminal MS to be sent refers to the connection parameters (negotiation information of Registration/Capability, burst profile), and the state information (e.g. service flow connection identifier, authentication information, encryption key information, ARQ parameter), for example, and is mainly information included in the message to be exchanged in the registration procedure (described later). This information is hereafter called "context".

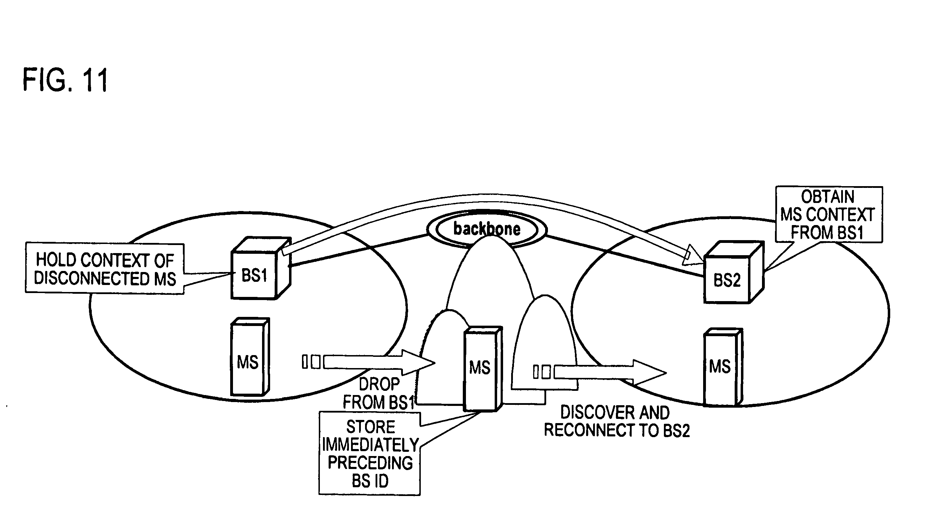

Fig. 11 is a diagram depicting the operation. The terminal MS is connected to and communicates with a first radio base station BS1. When the terminal MS moves and enters a tunnel where radio waves from the first radio base station BS1 do not arrive, connection between the terminal MS and the first radio base station BS1 is interrupted. When the connection is interrupted, the terminal MS stores an ID of the first base station BS1 and searches for radio waves of the new radio base station TBS. On the other hand, the first radio base station BS1 holds the context of the terminal MS for a predetermined time.

When the terminal MS exits the tunnel and detects the radio waves of the second radio base station BS2, the terminal MS performs the registration procedure to a second radio base station BS2 for reconnection. At this time, the terminal MS notifies that the previously connected radio base station BS is the first radio base station BS1, and the second radio base station BS2 requests the first radio base station BS1 to send the context. Since the second radio base station BS2 holds the context of the terminal MS, the terminal MS can omit a part of the registration procedure with the second radio base station BS.

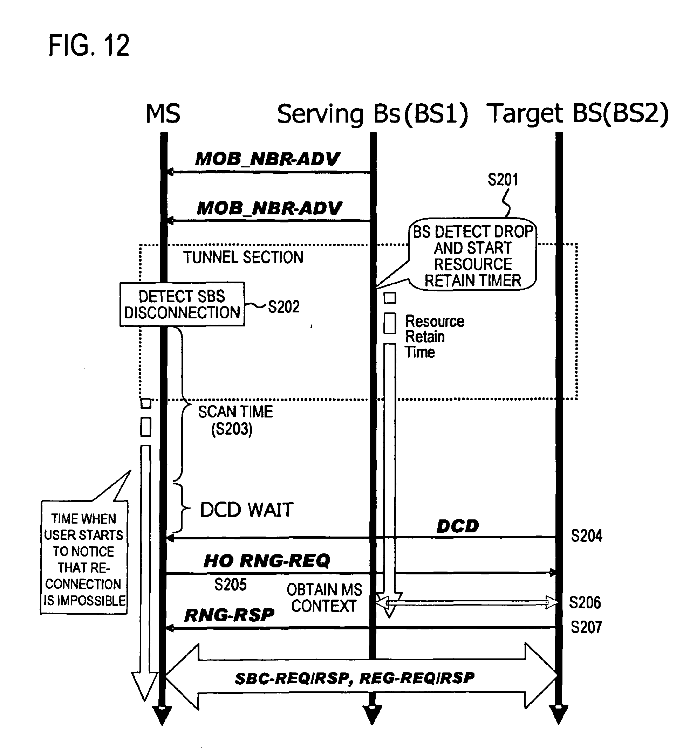

Fig. 12 is a diagram depicting a detailed sequence example.

The terminal MS is connected to and is communicating with the radio base station SBS (first radio base station BS1). At this time, the radio base station SBS broadcasts an advertisement message (MOB_NBR-ADV message) on the radio base station BS having a cell range adjacent to a radio wave arrival range (hereafter "cell") of the radio base station SBS.

The terminal MS enters a tunnel section, and if the terminal MS and radio base station BS cannot transmit and receive the message which is periodically exchanged active for a predetermined time (cannot keep alive), the terminal MS and radio base station BS judge that the connection is interrupted (S201, S202).

For example, the terminal MS and radio base station BS detects disconnection when a sequence of such messages as RNG-REQ (Ranging Request) and RNG-RSP (Ranging Response) stop. The terminal MS also detects disconnection when the terminal MS cannot receive such messages as DCD (Downlink Channel Descriptor) and UCD (Uplink Channel Descriptor) which are periodically broadcasted from the radio base station BS (messages for specifying a modulation method of burst on a radio channel, for example).

When the terminal MS detects disconnection of the communication with the radio base station SBS, the terminal MS stores an ID of the radio base station SBS, and scans the radio waves in order to search for another radio base station BS that can be connected (S203). On the other hand, when the radio base station SBS detects disconnection of the communication with the terminal MS, the radio base station SBS starts a timer (Resource Retain Timer) for holding the context of the terminal MS for a predetermined time.

Then the terminal MS continues scanning, and if the radio waves from another radio base station TBS are received, the terminal MS waits for receiving the DCD and UCD messages from the radio base station BS. When these messages are received from the radio base station TBS (S204), the terminal MS starts the registration procedure to the radio base station TBS. The registration procedure is in the sequence of (1) Initial Ranging, (2) exchanging Basic Capability, (3) authentication, and (4) registration, and a corresponding message is exchanged between the terminal MS and the radio base station BS in the respective step.

Here, the terminal MS inserts the ID of the radio base station SBS into the RNG-REQ message, which is the beginning of the registration procedure, and sends this message to the radio base station TBS (S205).

The radio base station TBS receives the RNG-REQ message and obtains the ID of the radio base station SBS, and then attempts to acquire the context of the terminal MS from the radio base station SBS. If this is within the timer period of the radio base station SBS, then the radio base station TBS can acquire the context of the terminal MS (S206).

The radio base station TBS sends the RNG-RSP message, including the acquired context, to the terminal MS (S207).

Since the context includes information to be inserted into each message, which is exchanged according to the registration procedure, transmission and reception of the SBC-REQ and SBC-RSP messages (messages exchanged in Basic Capability) and the REG-REQ and REG-RSP messages (messages exchanged in registration) between the terminal MS and the radio base station BS can be omitted, and the time required for registration can be decreased.

Patent Document 1 discloses a system, radio base station, method, and mobile terminal according to the preamble of each independent claim. A mobile terminal is able to perform a handover between adjacent radio areas of access routers linked by a backbone network.

Patent Document 2 discloses a wireless access communication system in which the handover decision for handing over a subscriber station from one base station to another is taken on the network side. The current serving base station generates a handover request message which is received by the subscriber station.
Non-patent Document 1:
   http://standards.ieee.org/getieee802/download/802.16e-2005.pdf IEEE Std 802.16e-2005
Patent Document 1: EP 1 524 814 A1
Patent Document 2: EP 1 534 035 A1

### DISCLOSURE OF THE INVENTION

However when the terminal MS performs scanning (S203), the terminals MS executes scanning of all the frequencies targeting all the radio base station BS, therefore it takes time to detect the radio waves of the frequency of the radio station TBS.

Also the radio base station BS sends the DCD and UCD messages with an interval of several tens of seconds (e.g. 10 seconds is the default). This means that after the terminal MS detects the radio waves of the frequency of the radio base station TBS, the terminal MS must wait for the maximum time of the transmission interval to receive this message, depending on the receive timing.

When the context of the terminal MS is acquired, the radio base station TBS inquires the radio base station SBS whether the context is acquired, after the RNG-REQ message is received from the terminal MS, so the radio base station TBS must wait until the RNG-REQ message is received.

With the foregoing in view, it is an object in one aspect of the present invention to provide a radio communication system, radio base station, terminal and base station switching method, wherein when a terminal moves between radio base stations which have a non-arrival area of radio waves, where the respective cell ranges do not adjust to each other, the reconnection time between a reconnection target radio base station and the terminal is decreased.

According to an aspect of the present invention there is provided a radio communication system, comprising: a radio base station; and a terminal, wherein the radio communication system is arranged to perform radio communication between the radio base station and the terminal; the radio base station including: an advertisement message generation unit which is arranged to generate an advertisement message including both channel information of a first radio base station having a cell range directly adjacent to a cell range, which is an arrival range of radio waves of the radio base station, and channel information of a second radio base station; and a transmission unit which is arranged to transmit the advertisement message to the terminal, the terminal including: a receive unit which is arranged to receive the advertisement message; and a terminal side handover processing unit which is arranged to detect whether a handover to the second radio base station is possible, and to perform handover to the second radio base station, using the channel information of the second radio base station included in the advertisement message, if the handover is possible; characterised in that

the second base station has a cell range adjacent to the cell range of the radio base station with a non-arrival area of radio waves intervening therebetween, in that the radio base station further includes a handover request message generation unit which is arranged to generate a handover request message including a handover instruction to the second radio base station, the transmission unit being further arranged to transmit the handover request message to the terminal, and in that in the terminal, the receive unit is further arranged to receive the handover request message, and the terminal side handover processing unit is responsive to the handover request message.

According to another aspect of the present invention, there is provided a radio base station for performing radio communication with a terminal, comprising:
an advertisement message generation unit which is arranged to generate an advertisement message including both channel information of a first radio base station having a cell range directly adjacent to a cell range, which is an arrival range of radio waves of the radio base station, and channel information of a second radio base station; and a transmission unit which is arranged to transmit the advertisement message to the terminal; characterised in that
the advertisement message generation unit is arranged to generate the advertisement message including channel information of the second base station having a cell range adjacent to the cell range of the radio base station with a non-arrival area of radio waves intervening therebetween, and in that the radio base station further includes a handover request message generation unit which is arranged to generate a handover request message including a handover instruction to the second radio base station, the transmission unit being further arranged to transmit the handover request message to the terminal.

According to other aspects of the present invention, there are provided a radio base station switching method and a mobile terminal each as defined in the corresponding independent claims..

According to the present invention, reconnection time between a reconnection target radio base station and a terminal can be decreased when the terminal moves between radio base stations of which cell ranges are not adjacent to each other.

### BRIEF DESCRIPTION OF THE DRAWINGS

Fig. 1 is a diagram depicting a configuration example based on a principle;
Fig. 2 is a diagram depicting another configuration example based on the principle;
Fig. 3 is a diagram depicting a network configuration example;
Fig. 4 is a diagram depicting a configuration example of a radio base station;
Fig. 5 is a diagram depicting a configuration example of a terminal;
Fig. 6 is a diagram depicting an example of the processing sequence;
Fig. 7A is an example of the Distant Neighbor BS list, Fig. 7B is an example of the Neighbor BS list, Fig. 7C is an example of the Recommend BS list in a radio base station, and Fig. 7D is an example of the Recommend BS list in a terminal;
Fig. 8 is a diagram depicting another configuration example of the radio base station;
Fig. 9 is a diagram depicting an example of the processing sequence;
Fig. 10 is an example of the Drop & Recover list;
Fig. 11 is a diagram depicting a conventional reconnection operation; and
Fig. 12 is a diagram depicting an example of a conventional processing sequence.

### BEST MODE FOR CARRYING OUT THE INVENTION

Embodiments of the present invention will now be described.

### First Embodiment

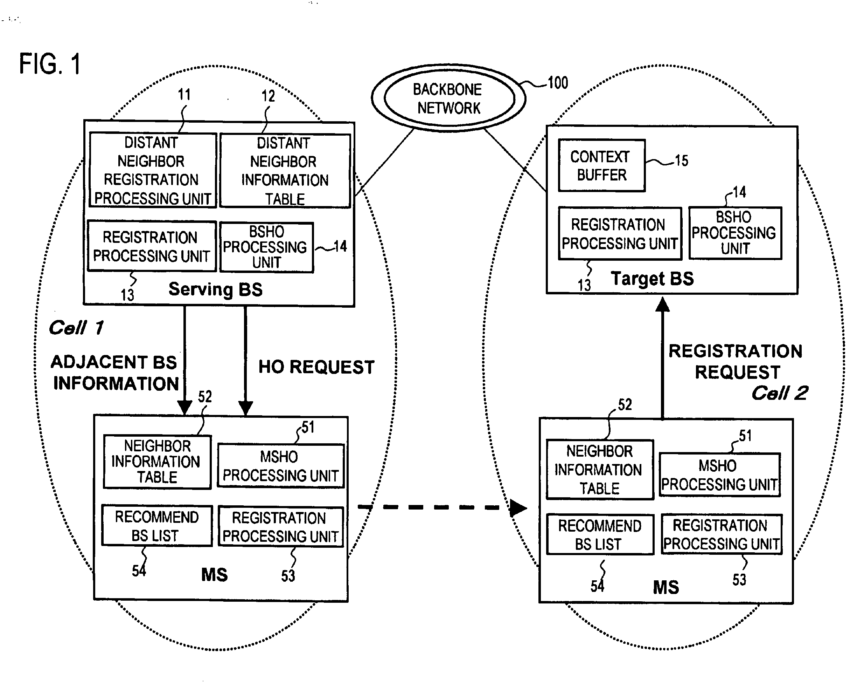

Fig. 1 is a diagram depicting an embodiment of a radio communication system. Fig. 1 depicts a state where a terminal MS moves between a radio base station SBS (Serving BS, handover source radio base station BS) and a radio base station TBS (Target BS, handover target radio base station BS), of which respective cell ranges are not adjacent to each other. The radio base stations SBS and TBS are interconnected via a backbone network 100.

The radio base station SBS includes a Distant Neighbor registration processing unit 11, Distant Neighbor information table 12, registration processing unit 13, and BSHO (Base Station Hand Over) processing unit 14.

The Distant Neighbor registration processing unit 11 registers a Distant Neighbor radio base station BS in the Distant Neighbor information table 12. The Distant Neighbor radio base station BS refers to the radio base station BS, of which cell range is not physically adjacent to that of the radio base station SBS, but to which the terminal MS may be connected next after moving.

In the Distant Neighbor information table 12, an identifier of the Distant Neighbor radio base station BS and channel information (information included in DCD and UCD messages) is registered.

As described in the prior art, the DCD and UCD messages are messages to specify demodulation and modulation methods and other information for frames which are transmitted and received between the terminal MS and the radio base station BS. These messages are periodically exchanged between the radio base station SBS and the terminal MS.

The registration processing unit 13 accepts a connection request from the terminal MS which desires connection to this radio base station SBS, and executes the necessary registration procedure (procedure to be executed in the sequence of (1) Initial Ranging, (2) exchange of Basic Capability, (3) Authentication and (4) Registration)).

The BSHO processing unit 14 instructs handover to the terminal MS, and sends context to the radio base station BS adjacent to the cell range of this radio base station SBS (hereafter adjacent radio base station BS) and Distant Neighbor radio base station BS via the backbone network 100. The handover instruction includes information to indicate the connection target radio base station TBS.

The context according to the present embodiment is also information included in a message transmitted and received between the terminal MS and the radio base station BS in the registration procedure, as described in the prior art.

The connection target radio base station TBS includes a registration processing unit 13, BSHO processing unit 14, and context buffer 15.

The registration processing unit 13 is the same as the registration processing unit 13 of the connection source radio base station SBS. The BSHO processing unit 14 of the radio base station TBS also has a function to receive context from another radio base station BS. The context buffer 15 holds the information on the received context.

On the other hand, the terminal MS includes a MSHO (Mobile Station Hand Over) processing unit 51, Neighbor information table 52, registration processing unit 53, and recommend BS list 54.

The MSHO processing unit 51 accepts the handover instruction from the radio base station SBS, and executes operation on the handover in the terminal MS.

The Neighbor information table 52 holds information on the adjacent radio base station BS transmitted by the radio base station SBS.

The registration processing unit 53 executes the registration procedure for the terminal MS to connect to the radio base station SBS, and detects disconnection with the radio base station SBS when the terminal MS cannot receive the radio waves from the radio base station SBS.

In the recommend BS list 54, candidates of the connection target radio base station TBS to which hand over is instructed by the radio base station SBS (adjacent radio base station BS may be included in addition to Distant Neighbor radio base station BS, or only Distant Neighbor radio base station BS may be registered) are registered.

The radio communication system constructed like this operates as follows.

The Distant neighbor registration processing unit 11 of the radio base station SBS accepts registration of information on the Distant Neighbor radio base station BS which is input from outside by an administrator, for example. At this time, the Distant Neighbor registration processing unit 11 obtains channel information (information included in each message of DCD and UCD) from the Distant Neighbor radio base station BS via the backbone network 100, and stores it in the Distant Neighbor information table 12.

When the terminal MS requests connection to the radio base station SBS, the registration processing unit 13 executes the registration procedure. When the registration completes, the registration processing unit 13 notifies the registration completion to the BSHO processing unit 14.

When the channel information of the Distant Neighbor radio base station BS is stored in the Distant Neighbor information table 12, the BSHO processing unit 14 inserts the respective channel information on the adjacent radio base station BS and Distant Neighbor radio base station BS into an advertisement message (MOB_NBR-ADV message described in the prior art) which is periodically transmitted, and broadcasts the advertisement message. The terminal MS receives this advertisement message using the MSHO processing unit 51.

The BSHO processing unit 14 also transmits the context of the terminal MS to the connection target radio base station TBS (Distant Neighbor radio base station BS), and instructs the terminal MS to handover to the Distant Neighbor radio base station BS as the connection target radio base station TBS.

Then the MSHO processing unit 51 of the terminal MS stores the respective channel information of the adjacent radio base station BS and the Distant Neighbor radio base station BS included in the received advertisement message in the Neighbor information table 52. If necessary, the MSHO processing unit 51 also checks the field strength of the adjacent radio base station BS (including Distant Neighbor radio base station BS) included in the advertisement message.

The MSHO processing unit 51 also accepts the handover instruction from the radio base station SBS, and checks the field intensity of the handover target (connection target) radio base station BS, that is the Distant Neighbor radio base station BS, included in the instruction. If the radio waves of the handover target radio base station BS cannot be found (e.g. the terminal MS is outside the service area of the Distant Neighbor radio base station BS), the MSHO processing unit 51 suspends execution of the handover, and stores the information on the handover target radio base station BS (Distant Neighbor radio base station BS) in the recommend BS list 54.

When the radio waves of the Distant Neighbor radio base station BS are detected and it is judged that handover is possible, the terminal MS executes the registration procedure to this radio base station BS. In other words, the terminal MS executes the handover processing.

If disconnection with the radio base station SBS is detected (Drop is detected), the registration processing unit 53 of the terminal MS notifies this to the MSHO processing unit 51. The MSHO processing unit 51, in the first place, attempts reconnection to the Distant neighbor radio base station BS stored in the recommend BS list 54 for a predetermined time.

This is because when the terminal MS exits the tunnel and moves into the service area of the handover target base station TBS, it is highly possible that the terminal MS can receive radio waves from the Distant Neighbor radio base station BS (handover target radio base station BS). When the radio waves from the Distant Neighbor radio base station BS stored in the recommend BS list 54 are received, the MSHO processing unit 51 executes the registration procedure to this radio base station BS. At this time, the identifier of the connection source (handover source) radio base station SBS is included in the message to be transmitted to the radio base station TBS.

If the registration request is received from the terminal MS, the radio base station TBS, which is the Distant Neighbor radio base station BS, reads the context, transmitted from the connection source radio base station SBS from the context buffer 15, omits the registration procedure that can be omitted, and completes the registration procedure.

The terminal MS receives the advertisement message from the radio base station SBS in this way, and the advertisement message includes information on the DCD and UCD messages of the Distant Neighbor radio base station BS. Therefore it is unnecessary to exchange the DCD and UCD messages between the connection target Distant Neighbor radio base station BS, and time for waiting for receiving the DCD and UCD messages is unnecessary. Hence time for reconnection processing can be decreased.

Also the terminal MS receives the handover instruction to instruct the Distant Neighbor radio base station BS from the radio base station SBS, and simply checks (scans) the field strength of this Distant Neighbor radio base station BS that was instructed. This makes it unnecessary for the terminal MS to scan all the frequencies targeting all the radio base station BS, and decreases the processing time for reconnection.

If the Distant Neighbor radio base station BS cannot be detected, the terminal MS may attempt to detect the radio waves of other adjacent radio base station listed in MOB_NBR-ADV, and execute the registration processing of the detected radio base station.

Also when handover to the handover target radio base station TBS is instructed to the terminal MS, the connection source radio base station SBS transmits the context of the terminal MS to the handover target radio base station TBS. Since the radio base station TBS need not acquire the context of the terminal MS after the terminal MS starts the registration procedure, the speed of the registration procedure can be increased.

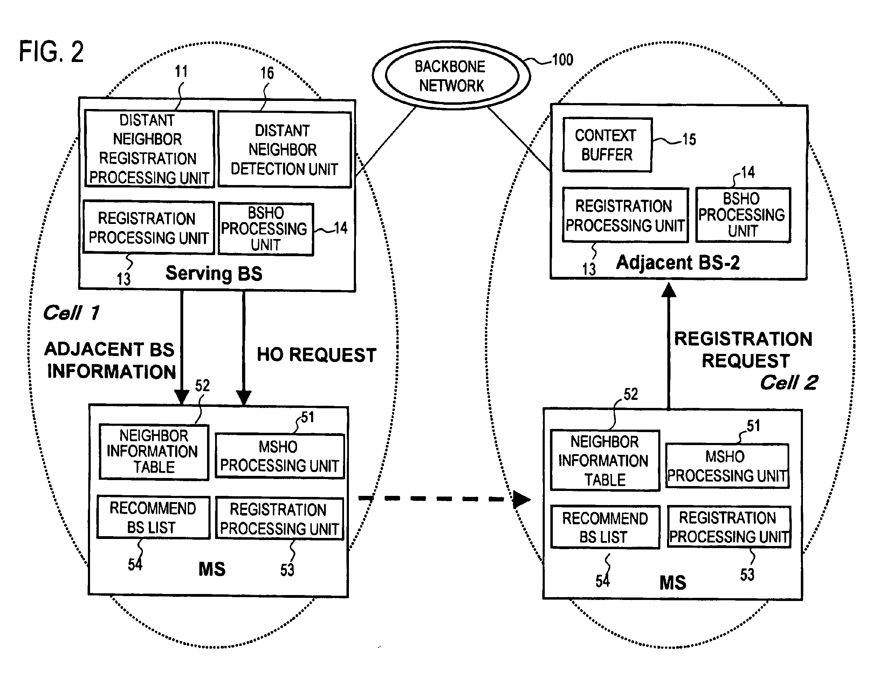

Another example will now be described. Fig. 2 is a diagram depicting another example in the radio communication system.

Fig. 2 is roughly the same as Fig. 1, but is **characterized in that** the connection source radio base station SBS includes a Distant Neighbor detection unit 16. In the example in Fig. 1, the information on the Distant Neighbor radio base station BS is input from the outside (administrator) via the Distant Neighbor registration processing unit 11. In this example, the Distant Neighbor detection unit 16 dynamically (automatically) detects the Distant Neighbor radio base station BS.

The operation is as follows. When a periodic exchange of messages (e.g. Keep Alive: Periodic Ranging message) is interrupted, the registration processing unit 13 of the radio base station SBS detects that the subordinate terminal MS enters a state where radio waves cannot arrive, such as inside a tunnel. And the registration processing unit 13 notifies this state to the Distant Neighbor detection unit 16.

When the terminal MS exits the tunnel after a predetermined time, the registration procedure is performed for one Distant Neighbor radio base station BS as the connection target radio base station TBS. The Distant Neighbor radio base station BS requests the connection source radio base station SBS to acquire the context of the terminal MS. The BSHO processing unit 14 of the radio base station SBS notifies the Distant Neighbor detection unit 16 that the context acquisition is requested.

When it is detected that the terminal MS is handed over to the Distant Neighbor radio base station BS, the Distant Neighbor detection unit 16 registers this radio base station BS in the Distant Neighbor information table 12 as the Distant Neighbor radio base station BS.

The operation after the Distant Neighbor radio base station BS is registered in the Distant Neighbor information table 12 is the same as that of the example in Fig. 1.

In this way, according to the present example, the Distant Neighbor radio base station BS is automatically registered in the Distant Neighbor information table 12, and the Distant Neighbor radio base station BS can be easily registered without administrator concern.

The registered Distant Neighbor radio base station BS information can be used for the applications depicted in the previous example.

### Second Embodiment

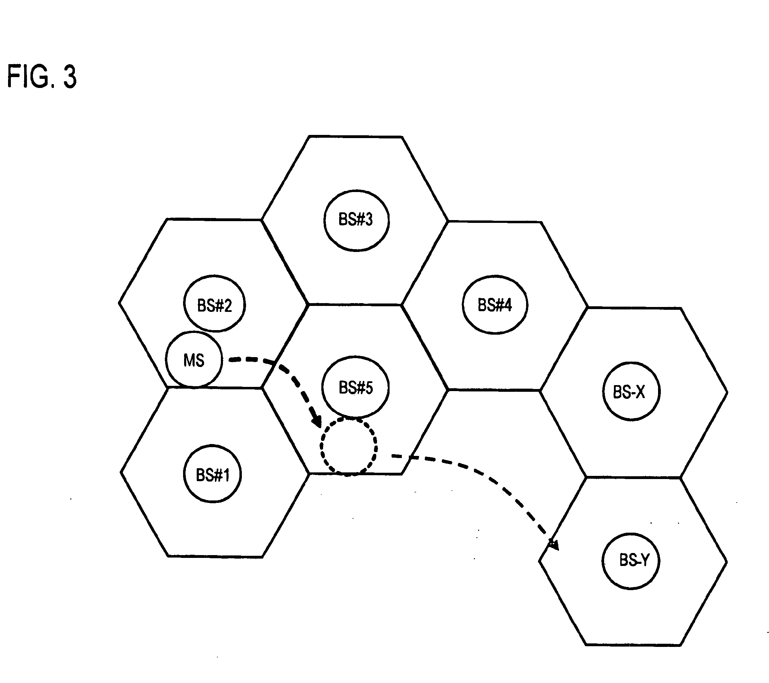

Second exemplary Embodiment will now be described with reference to Fig. 3 to Figs. 7A to 7D.

Fig. 3 is a diagram depicting a network configuration example according to Second exemplary Embodiment. In Fig. 3, a hexagon indicates a range where radio waves arrive (cell) of one radio base station BS, and the radio base station BS is disposed at the center thereof. Each radio base station BS has an identifier to be distinguished from others.

When the terminal MS is located in the cell range of the radio base station BS#5, the Distant Neighbor radio base station BS which is not physically adjacent to the radio base station BS#5 is radio base stations BS-X and BS-Y, and adjacent radio base station BS is radio base stations BS#1 to BS#4.

Generally cells are disposed without spaces there between, except for an area where no one lives or an area where the cell cannot be geographically disposed. In the example in Fig. 3, it is assumed that a high mountain exists between the radio base station BS#5 and radio base station #Y, where the radio base station BS cannot be disposed. This is a non-arrival area of radio waves. In the non-arrival area of radio waves, communication of the terminal MS with the radio base stations BS#5 and BS-Y are interrupted. When the terminal MS exits a tunnel, the terminal MS enters the cell of the radio base station BS-Y, and performs reconnection processing with the radio base station BS-Y. In First Embodiment, increasing the speed of this reconnection processing will be described. The configurations of the radio base station BS#1 to BS#5, BS-X and BS-Y are identical.

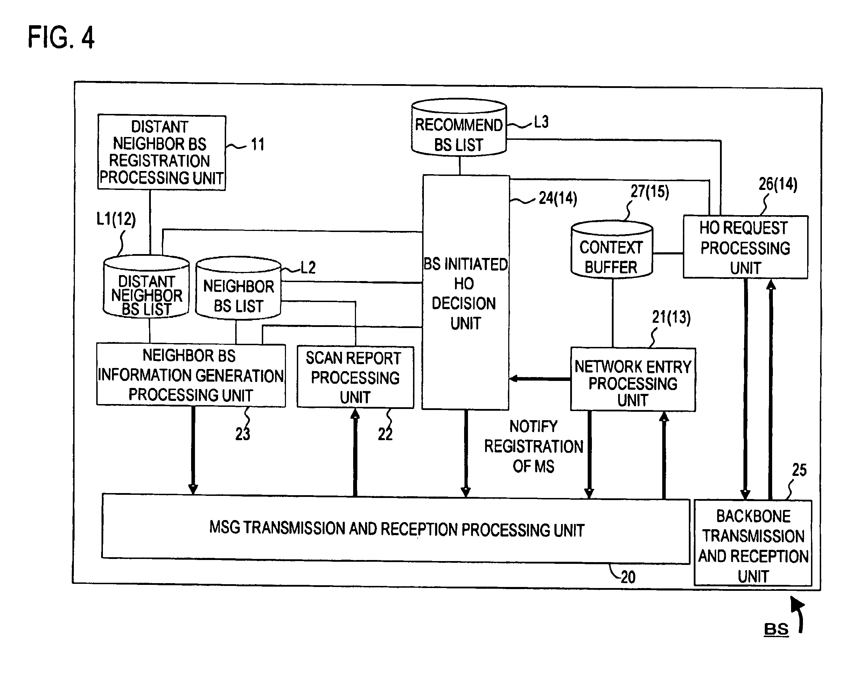

Fig. 4 is a diagram depicting a configuration example of a radio base station BS. The radio base station BS includes a message transmission and reception processing unit 20, network entry processing unit 21, scan report processing unit 22, Neighbor BS information generation processing unit 23, BS Initiated HO decision unit (hereafter BSHO decision unit) 24, backbone transmission and reception unit 25, HO request processing unit 26, context buffer 27, Distant Neighbor BS registration processing unit 11, table holding a Distant Neighbor BS list (hereafter Distant Neighbor BS list) L1, table holding a Neighbor list (hereafter Neighbor BS list) L2, and table holding a Recommend BS list (hereafter Recommend BS list) L3. In Fig. 4, a composing element corresponding to Fig. 1 is denoted with a same numeral in parenthesis.

The message transmission and reception processing unit 20 converts various messages to be transmitted to the terminal MS into radio waves, and transmits the radio waves to the terminal MS, and receives radio waves from the terminal MS and detects various messages.

The network entry processing unit 21 is a processing unit which executes the registration procedure with the terminal MS, where a control message to be exchanged with the terminal MS is generated and output to the message transmission and reception processing unit 20, and the control message from the terminal MS is input from the message transmission and reception processing unit 20. When the registration procedure with the terminal MS completes, the network entry processing unit 21 notifies this completion to the BSHO decision unit 24.

The scan report processing unit 22 receives the field strength report message (hereafter SCN-REPORT message) of adjacent radio base station BS and Distant Neighbor radio base station BS measured by the terminal MS, and records the result of the field strength of each radio base station BS included in the message in the Neighbor BS list L2.

The Neighbor BS information generation processing unit 23 generates an advertisement message including information on a frame transmission and reception method on an air channel of the radio base station BS which is a candidate of the connection targets (handover) when the terminal MS moves (channel information (included in messages DCD and UCD)). The advertisement message includes channel information on both the Distant Neighbor radio base station BS and adjacent radio base station BS.

When completion of the registration procedure of the terminal MS is notified from the network entry processing unit 21, the BSHO decision unit 24 refers to the Distant Neighbor BS list L1, and if information on the Distant Neighbor radio base station BS is registered in the Distant Neighbor BS list L1, the BSHO decision unit 24 registers the registered Distant Neighbor BS in the Recommend BS list L3 as a Recommend BS, which is a handover candidate. The BSHO decision unit 24 instructs the Recommend BS to send the context of the terminal MS via the HO request processing unit 26, and when the distribution of the context completes, the BSHO decision unit 24 creates a handover message (hereafter BSHO-REQ message) in which the radio base station BS registered in the list L3 is a handover target. The list L1 and list L2 may be a same list.

The backbone transmission and reception unit 25 is a functional block to transmit and receive messages via another radio base station BS and the backbone network 100. The context of the terminal MS is transmitted and received in this backbone transmission and reception unit 25.

The HO request processing unit 26 transmits the context of the terminal MS to the Recommend BS according to the instruction of the BSHO decision unit 24, and if the context of the terminal MS is received by the backbone transmission and reception unit 25, the HO request processing unit 26 registers it in the context buffer 27.

The Distant Neighbor BS registration processing unit 11 corresponds to the above mentioned Distant Neighbor registration processing unit 11, and receives the registration of information on non-adjacent radio base station BS by an administrator, acquires channel information (information included in messages DCD and UCD) from these radio base station BS, and stores it in the Distant Neighbor BS list L1, for example.

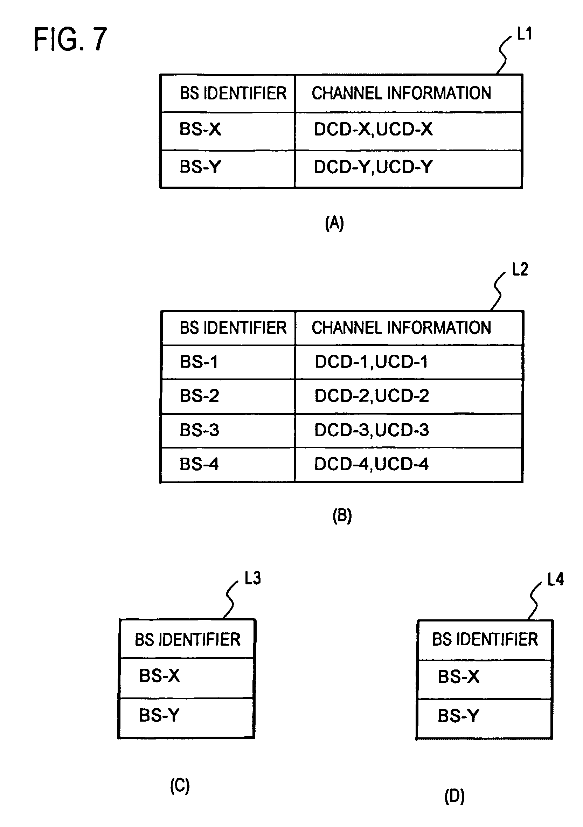

In the Distant Neighbor BS list L1, channel information is registered along with the identifier of the Distant Neighbor radio base station BS. This information is registered by an administrator of the base station BS, for example. Fig. 7A depicts an example of the Distant Neighbor BS list L1.

In the Neighbor BS list L2, channel information of the adjacent radio base station BS is registered. In the same way, this information is registered by the administrator of the base station BS, for example. Fig. 7B depicts an example of the Neighbor BS list L2.

In the Recommend BS list L3, information on the handover target radio base station BS of the terminal MS is registered. Here the handover target radio base station is the Distant Neighbor BS, which is the non-adjacent radio base station. This information is registered by the BSHO decision Unit 24. Fig. 7C depicts an example of the Recommend BS list L3.

The context buffer 27 is a buffer in which the context of the terminal MS is registered, and the context is stored or read by the network entry processing unit 21 or HO request processing unit 26.

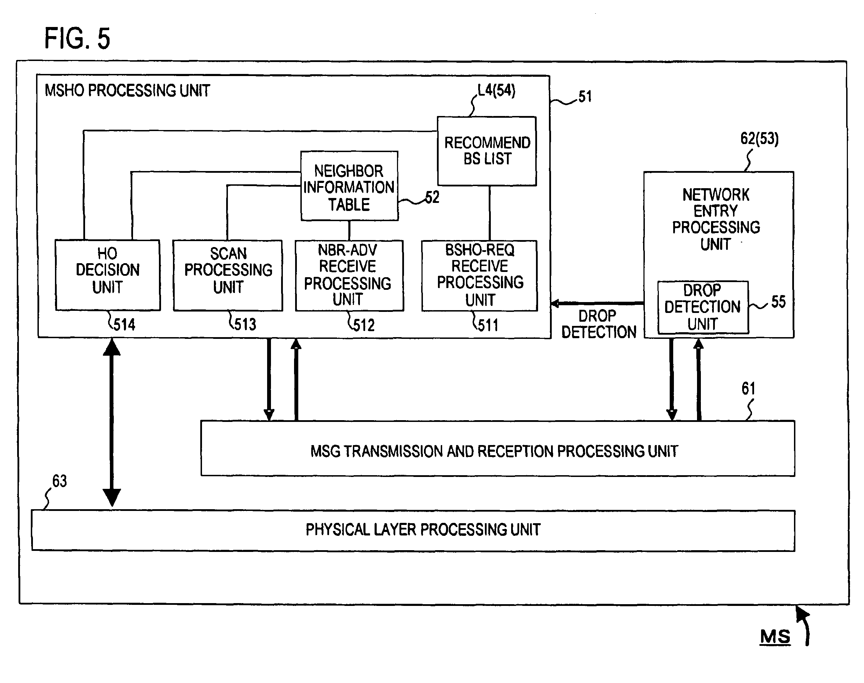

Now a configuration of the terminal MS is described. Fig. 5 is a diagram depicting a configuration example of the terminal MS.

The terminal MS includes a message transmission and reception processing unit 61, network entry processing unit 62, physical layer processing unit 63, and MSHO processing unit 51.

The MSHO processing unit 51 further includes a BSHO-REQ receive processing unit 511, NBR-ADV receive processing unit 512, scan processing unit 513, HO decision unit 514, Neighbor information table 52, and Recommend BS list L4. A composing element corresponding to the block diagram in Fig. 2 is denoted with a same numeral in parenthesis.

The message transmission and reception processing unit 61 converts radio waves from the radio base station BS into a message, or converts the message to the radio base station BS into radio waves.

The network entry processing unit 62 executes registration procedure processing to the radio base station BS. The network entry processing unit 62 also performs processing to exchange messages (e.g. Periodic Ranging message) periodically with the radio base station BS after the registration procedure ends, and confirms connection of the radio base station BS ("Keep Alive" mentioned above).

The network entry processing unit 62 includes a Drop detection unit 55, and if Keep Alive cannot be confirmed for a predetermined time, the Drop detection unit 55 detects that the terminal MS cannot receive radio waves of the radio base station BS, and communication is disconnected, and notifies Drop detection to the MSHO processing unit 51 to indicate that synchronization with this radio base station BS is lost.

The BSHO-REQ receive processing unit 511 of the MSHO processing unit 51 receives the BSHO-REQ message from the radio base station BS, and registers the handover candidate radio base station BS (Distant Neighbor radio base station BS) included in this message in the Recommend BS list L4.

The NBR-ADV receive processing unit 512 registers the channel information of the radio base station BS included in the advertisement message (Neighbor BS information advertisement message) received from the radio base station BS in the Neighbor information table 52. Since the advertisement message includes the channel information of the adjacent radio base station BS and the channel information of the Distant Neighbor radio base station BS, the channel information is registered in the Neighbor information table 52, along with the identifiers of these radio base stations BS.

The scan processing unit 513 outputs an instruction to measure the field strength of the adjacent radio base station BS and Distant Neighbor radio base station BS registered in the Neighbor information table 52, to the physical layer processing unit 63. The physical layer processing unit 63 measures the field strength of these radio base stations BS, and reports the result (SCAN result) to the scan processing unit 513. The scan processing unit 513 inserts the measured field strength in a SCN-REPORT message, and sends it to the currently connected radio base station BS (connection source radio base station SBS), and registers the measured field strength in the Neighbor information table 52 (scan result is registered).

When the BSHO-REQ message receive notice is received from the BSHO-REQ receive processing unit 511, the HO decision unit 514 refers to the scan result of each adjacent radio base station BS registered in the Neighbor information table 52, and if the field strength is lower than the threshold, execution of handover is suspended. When Drop detection is notified from the network entry processing unit 62 in this suspending state, the HO decision unit 514 instructs the physical layer processing unit 63 to measure the field strength of the Distant Neighbor radio base station BS registered in the Recommend BS list L4. If it is already measured, this registered measurement result may be used.

When the terminal MS is located in the non-arrival area of radio waves, such as inside the tunnel, the field strength of the Distant Neighbor radio base station BS to be measured remains low and cannot synchronize with the frequency corresponding to the radio base station BS. However, if the terminal MS exits the non-arrival area of radio waves, such as inside the tunnel, a moves into the cell range of the Distant Neighbor radio base station BS, the field strength of the Distant Neighbor radio station BS can synchronize with the frequency of the Distant Neighbor radio base station BS.

If the field strength becomes adequate to synchronize with the frequency of the Distant Neighbor radio base station BS, the HO decision unit 514 instructs the network entry processing unit 62 to execute the registration procedure of this radio base station BS (connection target radio base station TBS).

The Neighbor information table 52 holds the channel information of the adjacent radio base station BS and Distant Neighbor radio base station BS included in the advertisement message received by the NBR-ADV receive processing unit 512. In the table 52, an identifier, channel information, and scan result are registered corresponding to each of the adjacent radio base station BS and Distant Neighbor radio base station BS.

The Recommend BS list L4 holds the handover target radio base station BS (Distant Neighbor radio base station BS) included in the BSHO-REQ message, which the BSHO-REQ receive processing unit 511 received from the radio base station BS.

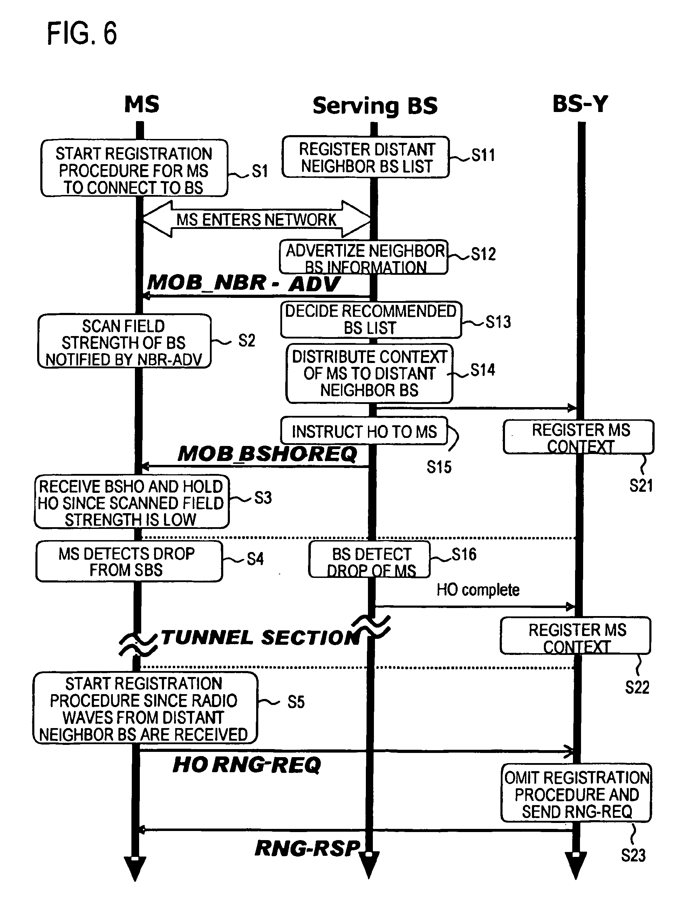

The operation of the radio communication system of the radio base station BS and terminal MS in this way will now be described. Fig. 6 is a sequence diagram depicting an example of the processing operation.

In this example, a handover operation of the terminal MS, which moved from the cell area of the radio base station BS#2 to the radio base station BS#5 to the radio base station BS-Y, is described.

When the cell, which is a radio wave arrival range, of the radio base station BS contacts the tunnel or a mountainous area, and it is expected that handover becomes impossible if the subordinate terminal MS moves into this direction, an administrator of the radio base station BS registers the radio base station BS, with which the registration procedure for reconnection after exiting the tunnel can possibly be executed, in the Distant Neighbor BS list L1 as Distant Neighbor radio base station BS (S11).

When the Distant Neighbor radio base station BS is registered in the Distant Neighbor BS list L1, the Distant Neighbor BS registration processing unit 11 acquires the channel information of the Distant Neighbor radio base station BS from the Distant Neighbor radio base station BS. In the case of the example in Fig. 3, if the terminal MS is currently located in the cell of the radio base station BS#5, each information of the Distant Neighbor radio base stations BS-X and BS-Y is registered in the list L1 (see Fig. 7A).

In the same way, the administrator of the radio base station BS registers the information of the adjacent radio base station BS having a cell range adjacent to the cell range of this radio base station BS in the Neighbor BS list L2 (see Fig. 7B).

When the terminal MS is handed over from the radio base station BS#2 to the radio base station BS#5, the terminal MS executes the registration procedure to the radio base station BS#5 (S1). As mentioned above, each procedure of (1) Initial Ranging, (2) Basic Capability exchange, (3) Authentication and (4) registration, is executed by exchanging messages ("Network Entry" in Fig. 6). If the radio base station BS#5 can receive the context (information included in the messages exchanged in the registration procedure) of the terminal MS from the radio base station BS#2, some of the registration procedure can be omitted because of the received information.

The radio base station BS#5 (this radio base station BS#5 is assumed to be the connection source radio base station SBS) executes this registration procedure using the network entry processing unit 21. When the network entry processing unit 21 executes the registration procedure with the terminal MS and the procedure ends normally, the network entry processing unit 21 notifies this normal ending to the BSHO decision unit 24.

Then the Neighbor BS information generation processing unit 23 of the radio base station BS#5 inserts the channel information of the radio base station BS, registered in the Distant Neighbor BS list L1 and Neighbor BS list L2 (in this example, adjacent radio base station BS#1 to BS#4 and non-adjacent radio base stations BS-X and BS-Y), into the advertisement message (MOB_NBR-ADV message) and sends this message to the terminal MS periodically (S12).

As described above, according to the present embodiment, the channel information on the handover target candidate Distant Neighbor radio base station BS (radio base stations BS-X and BS-Y) is inserted into the advertisement message which the radio base station BS periodically transmits, and is sent to the terminal MS, so the terminal MS does not need the wait time for acquiring the DCD and UCD messages when the terminal MS reconnects with the Distant Neighbor radio base station BS, and the time required for the reconnection processing can be decreased.

When the advertisement message is received, the NBR-ADV receive processing unit 512 of the terminal MS acquires the channel information of the radio base station BS included in the advertisement message, and registers this information in the Neighbor information table 52. The scan processing unit 513 scans the radio base station BS registered in the Neighbor information table 52 (adjacent radio base stations BS#1 to BS#4 and Distant Neighbor radio base stations BS-X and BS-Y), and registers the field strength measurement result in this table 52 (S2).

After receiving notice on the normal end of the registration procedure from the network entry processing unit 21, the BSHO decision unit 24 of the radio base station BS#5 creates the Recommend BS list L3 upon receiving notice on the transmission of the advertisement message from the Neighbor BS information generation processing unit 23 (S13). This list L3 is created by the BSHO decision unit 24 reading the identifiers of the radio base station BS registered in the Distant Neighbor BS list L1, and registering the identifiers in the Recommend BS list L3. In the present example, information on the radio base stations BS-X and BS-Y is registered in the Recommend BS list L3 (see Fig. 7C). As described above, L1 and L3 can be a shared list, and in this case, separate registration for L3 is unnecessary.

Then the BSHO decision unit 24 sends the context of the terminal MS to the radio base station BS registered in the Recommend BS list L3 (S14). The context of the terminal MS is sent to the radio base stations BS-X and BS-Y.

The HO request processing unit 26 of the radio base stations BS-X and BS-Y register the context from the radio base station BS#5 in the context buffer 27 (S21). Since the radio base stations BS-X and BS-Y, which are the handover target candidates of the terminal MS, can acquire the context of the terminal MS without waiting for reception of the ranging message from the terminal MS, acquisition of the context of the terminal MS can be quickened compared with the prior art.

When the transmission of the context of the terminal MS ends, the BSHO decision unit 24 of the radio base station BS#5 transmits the BSHO-REQ message (MOB_BSHO-REQ message) to the terminal MS (S15). By this BSHO-REQ message, handover is instructed to the terminal MS. As mentioned above, this message includes identifiers of the radio base station BS registered in the Recommend radio base station list (Distant Neighbor radio base stations BS-X and BS-Y in the present example).

In this way, according to the present embodiment, the handover instruction is transmitted to the terminal MS as soon as the radio base station BS#5 completes the registration procedure with the terminal MS, transmits the advertisement message, and transmits the context of the terminal MS to the Distant Neighbor radio base station BS.

When the BSHO-REQ message is received from the radio base station BS#5, the BSHO-REQ receive processing unit 511 of the terminal MS registers the identifiers of the radio base stations BS-X and BS-Y included in this message in the Recommend BS list L4 (see Fig. 7D). When the BSHO-REQ message is received, the BSHO-REQ receive processing unit 511 also notifies the handover request from the radio base station BS#5 to the HO decision unit 514.

When the handover request is notified from the BSHO-REQ receive processing unit 511, the HO decision unit 514 checks the field strengths of the radio base stations BS-X and BS-Y registered in the Recommend BS list L4, referring to the Neighbor information table 52. If the checked field strength (field strength received from the Distant Neighbor radio base station BS) is the threshold of the field strength required for communication or less, the HO decision unit 514 suspends execution of the handover from the radio base station BS#5 (S3). For example, the field strengths of the radio base stations BS-X and BS-Y become the threshold or less when the terminal MS is in the cell range of the radio base station BS#5.

If it is detected that a field strength received from a Distant Neighbor radio station BS exceeds the threshold, the terminal MS performs registration processing so as to execute handover processing to this radio base station BS.

Now a case is assumed where the terminal MS enters the terminal between the radio base station BS#5 and the radio base station BS-Y. In this case, the network entry processing unit 62 of the terminal MS cannot receive periodic messages from the radio base station BS#5 (e.g. DCD message, band allocation of Periodic Ranging) for a predetermined time or longer, and sends the Drop detection to the HO decision unit 514 to notify that radio waves from the radio base station BS#5 cannot be received (S4).

When the Drop detection notice is received from the network entry processing unit 62, the HO decision unit 514 starts handover to the radio base station BS (radio base stations BS-X, BS-Y) being suspended. Specifically, the scan processing unit 513 repeats scanning radio waves until synchronizing with the radio frequency of the radio base stations BS-X and BS-Y, which have been suspended. The scan processing unit 513 may scan the radio waves of other radio base station BS (radio base stations BS#1 to BS#4) included in the advertisement message, but this scanning is performed after scanning the Distant Neighbor radio base station BS according to the scanning sequence here.

In this way, in the present example, the terminal MS scans radio waves of the radio base station BS included in the BSHO-REQ message from the radio base station BS#5 (Distant Neighbor radio base stations BS-X and BS-Y in this case) with priority (preferably only for the radio base station BS registered in the Recommend BS list L4), so the Distant Neighbor radio base station BS can be detected more quickly than the case of scanning all the frequencies of all the radio base station BS, therefore reconnection processing of the terminal MS to the radio base station BS-Y can be quickened.

When the terminal MS exits the tunnel, the physical layer processing unit 63 can synchronize with the radio frequency of the radio base station BS-Y. The physical layer processing unit 63 notifies this state to the HO decision unit 514, and the HO decision unit 514, which received this notice, instructs the network entry processing unit 62 to execute the registration procedure to the radio base station BS-Y.

The network entry processing unit 62 sends the RNG-REQ message, which is the first procedure of the registration procedure, to the radio base station BS-Y (S5). At this time, the network entry processing unit 62 inserts the HO-ID and identifier of the connection source radio base station BS#5, included in the BSHO-REQ message, into the RNG-REQ message, and sends the message.

When the RNG-REQ message is received from the terminal MS, the network entry processing unit 21 of the radio base station BS-Y refers to the context buffer 27, and if the context of the radio base station BS#5 has already been registered, the network entry processing unit 21 omits all or a part of the registration procedure with the terminal MS, and inserts this information into the RNG-RSP message, and sends this message to the terminal MS (S23).

### Third exemplary Embodiment

Third exemplary Embodiment will now be described. In the first Embodiment, it is assumed that the administrator registers the information on the Distant Neighbor radio base station BS in the Distant Neighbor BS list L1. In Third exemplary Embodiment, the information on Distant Neighbor radio base station BS is dynamically (automatically) registered in this list L1. This is particularly effective, when a new tunnel or road is completed in the non-arrival area of radio waves, and an unexpected radio base station BS becomes the non-adjacent radio base station BS, for example.

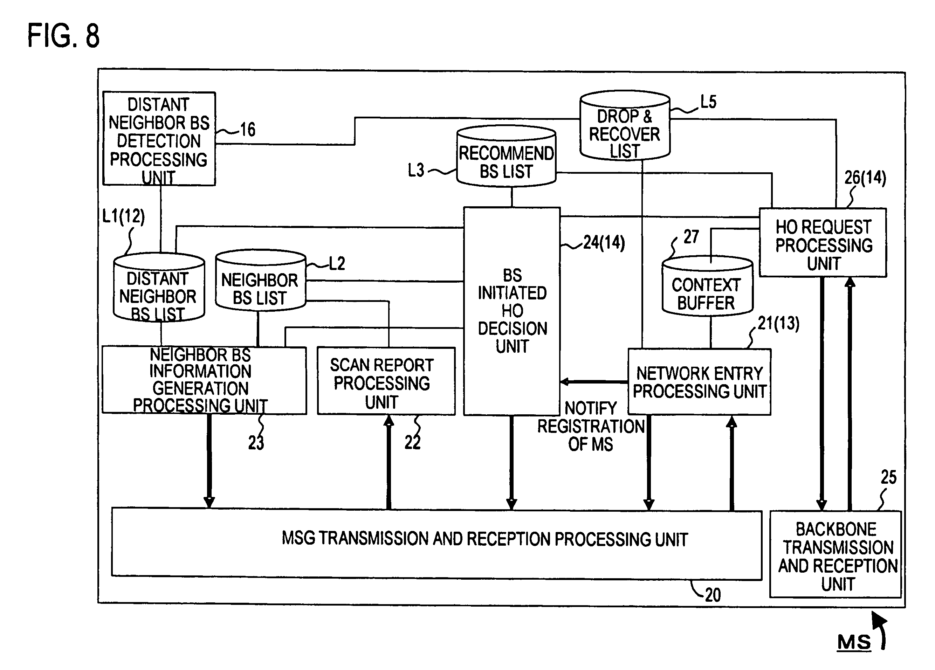

Fig. 8 is a diagram depicting a configuration example of the radio base station BS according to Third Embodiment. A composing element the same as in Fig. 2 is denoted with a same numeral in parenthesis.

The radio base station BS is roughly the same as the configuration example of the radio base station BS of Second Embodiment (see Fig. 4), but it is **characterized in that** the radio base station BS includes the Distant Neighbor BS detection unit 16 and a Drop & Recover list L5 are included.

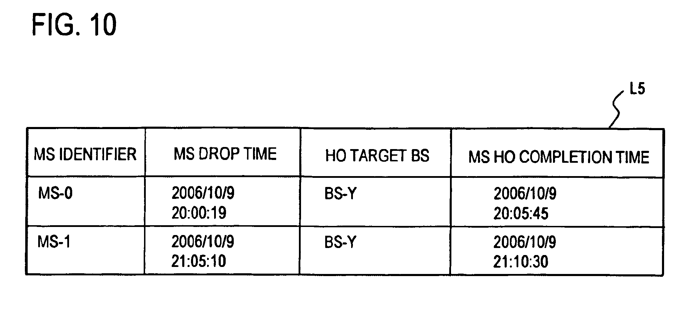

In the Drop & Recover list L5, the identifier and Drop time of the terminal MS which suddenly dropped during connection with the radio base station BS in the past, and the registration procedure (network entry) completion time which the dropped terminal MS performed with the Distant Neighbor radio base station BS, are registered. The identifier and Drop time of the terminal MS are registered by the network entry processing unit 21, and the time when the registration procedure is completed is registered by the HO request processing unit 26. Fig. 10 depicts an example of the Drop & Recover list L5.

The Distant Neighbor BS detection processing unit 16 refers to the Drop & Recover list L5, and if the correspondence of the recording of the dropped terminal MS (identifier and Drop time) and the completion time of the registration procedure to the Distant Neighbor radio base station BS, is repeated for a threshold or more, the Distant Neighbor BS detection processing unit 16 registers the information on the Distant Neighbor radio base station BS in the District Neighbor BS list L1 assuming that some path to the Distant Neighbor radio base station BS may exist. The time information is used here, but to be simpler, the later mentioned radio base station BS, to which the context is transferred, may be registered in the District Neighbor BS list L1. In this case, it is preferable to remove the adjacent radio base station BS from the registration targets of L1.

The Distant Neighbor BS detection processing unit 16 is the same as the Distant Neighbor detection unit 16 in Fig. 2. The configuration of the terminal MS is the same as Second Embodiment (see Fig. 5).

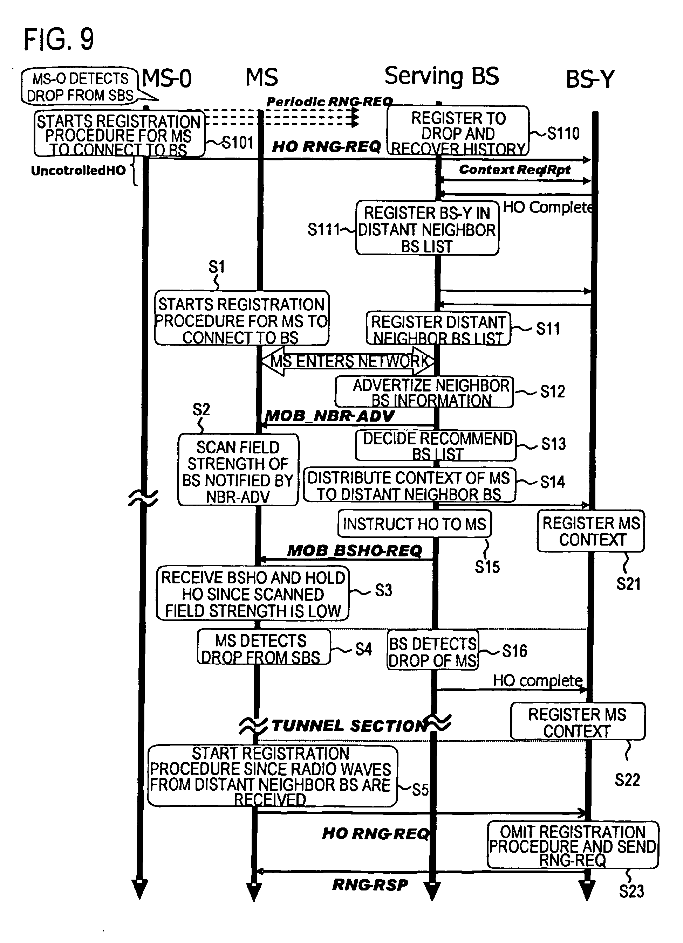

The operation will now be described. Fig. 9 is a sequence diagram depicting an example of the operation processing. The operation, after the Distant Neighbor BS detection processing unit 16 creates the Distant Neighbor BS list L1 referring to the Drop & Recover list L5, is the same as First Embodiment (see Fig. 6), of which description is therefore omitted. Fig. 3 is used for the network configuration example.

In this sequence, it is assumed that the target terminal MS is the terminal MS-0. And no radio base station BS is registered in the Distant Neighbor BS list L1 of the radio base station BS, or no radio base station BS to which the terminal MS-0 moves after exiting the tunnel (radio base station BS-Y in this example) is registered in the list L1.

When processing starts in this state, the terminal MS-0 maintains connection with the radio base station BS#5 by periodically receiving DCD messages from the radio base station BS#5 (connection source radio base station SBS) or exchanging ranging messages for Periodic Ranging.

When the terminal MS-0 enters the tunnel, message for maintaining connection cannot be exchanged, and Keep Alive is interrupted, and Drop is detected by the Drop detection unit 55.

On the other hand, the network entry processing unit 21 of the radio base station BS#5 detects Drop of the terminal MS-0, and registers the identifier of the dropped terminal MS-0 and dropped time in the Drop & Recover list L5 (S110). It is assumed that the identifier of the dropped terminal MS-0 is held by the network entry processing unit 21 by the previous periodic message exchange. The Drop time is detected by the timer in the network entry processing unit 21.

After exiting the tunnel, the network entry processing unit 62 of the terminal MS-0 sends the RNG-REQ message to the radio base station BS-Y. Since necessary information is not registered in the Distant Neighbor list L1, the network entry processing unit 62 sends this message according to the procedure of the prior art. At this time, the network entry processing unit 62 inserts the identifier of the connection source radio base station BS#5 into the RNG-REQ message, and sends it. Thereby the terminal MS-0 starts the registration procedure to the radio base station BS-Y (S101).

When the RNG-REQ message is received from the terminal MS-0, the network processing unit 21 of the radio base station BS-Y refers to the context buffer 27, but since the context of the terminal MS-0 does not been sent from the radio base station BS#5 to the radio base station BS-Y (because the terminal MS-0 dropped from the radio base station BS#5 unexpectedly), the network entry processing unit 21 requests the radio base station BS#5 to acquire the context of the terminal MS-0 via the backbone network 100 using the identifier of the connection source radio base station BS#5 included in the RNG-REQ message (sends the Context Req message to the radio base station BS#5).

The HO request processing unit 26 of the radio base station BS#5 refers to the context buffer 27 and acquires the context of the terminal MS-0, and sends the context of the terminal MS-0 to the radio base station BS-Y via the backbone network 100 in the same way (sends the Context Rpt message).

If the context of the terminal MS-0 can be acquired from the radio base station BS#5, the HO request processing unit 26 of the radio base station BS-Y omits all or a part of the registration procedure, and completes the registration procedure to the terminal MS-0. The HO request processing unit 26 sends the HO complete message to notify completion of the registration procedure via the backbone network 100 to the radio base station BS#5.

When the HO complete message is received from the radio base station BS-Y, the HO request processing unit 26 of the radio base station BS#5 registers the handover completion time if the entry of the terminal MS-0 exists in the Drop & Recover list L5 (see Fig. 10).

When the Distant Neighbor BS detection processing unit 16 of the radio base station #5 refers to the Drop & Recover list L5, and if it is detected that a threshold or higher number of terminals MS-0 (e.g. a plurality of terminals MS-0) have been handed over to a radio base station (non-adjacent radio base station BS) at a same handover target, the Distant Neighbor BS detection processing unit 16 registers this radio base station BS in the Distant Neighbor BS list L1 (S111).

At this time, the Distant Neighbor BS detection processing unit 16 inquires the channel information of the registered radio base station BS to this radio base station BS, and registers the channel information in the Distant Neighbor BS list L1. The time that should be registered in the Distant Neighbor BS list L1 (Aging Time) is also registered. After the Aging Time elapses, the entry of this radio base station BS is deleted from the Distant Neighbor BS list L1, so memory capacity can be conserved.

The example described in First Embodiment is effective for the processing hereafter. When the state the same as First Embodiment occurs, the network processing unit 21 and HO request processing unit 26 also register the time when the terminal MS dropped and the record of the handover target in the Drop & Recover list L5, and if the entry already exists in the Distant Neighbor BS list L1, the Distant Neighbor BS detection processing unit 16 updates the Aging Time. The Distant Neighbor BS detection processing unit 16 deletes this entry when the Aging Time elapses.

### INDUSTRIAL APPLICABILITY

The present invention can be suitably applied to a radio communication system in which a mobile terminal communicates with a radio base station, such as a portable telephone and PDA (Personal Digital Assistance).

## Claims

1. A radio communication system, comprising;
a radio base station (BS#5); and
a terminal (MS), wherein
the radio communication system is arranged to perform radio communication between the radio base station (BS#5) and the terminal (MS);
the radio base station (BS#5) including:
an advertisement message generation unit (23) which is arranged to generate an advertisement message (MOB_NBR-ADV) including both channel information of a first radio base station (BS#1 - BS#4) having a cell range directly adjacent to a cell range, which is an arrival range of radio waves of the radio base station (BS#5), and channel information of a second radio base station (BS-X, BS-Y); and
a transmission unit (20) which is arranged to transmit the advertisement message (MOB_NBR-ADV) to the terminal (MS),
the terminal (MS) including:
a receive unit (61) which is arranged to receive the advertisement message (MOB_NBR-ADV); and
a terminal side handover processing unit (51) which is arranged to detect whether a handover to the second radio base station (BS-X, BS-Y) is possible, and to perform handover to the second radio base station, using the channel information of the second radio base station included in the advertisement message (MOB_NBR-ADV), if the handover is possible; **characterised in that**
the second base station (BS-X, BS-Y) has a cell range adjacent to the cell range of the radio base station (BS#5) with a non-arrival area of radio waves intervening therebetween, **in that**
the radio base station further includes a handover request message generation unit (24) which is arranged to generate a handover request message (MOB_BSHO-REQ) including a handover instruction to the second radio base station (BS-X, BS-Y), the transmission unit (20) being further arranged to transmit the handover request message to the terminal (MS), and **in that**
in the terminal (MS), the receive unit (61) is further arranged to receive the handover request message (MOB_BSHO-REQ), and the terminal side handover processing unit (51) is responsive to the handover request message.

2. The radio communication system according to Claim 1, wherein
the radio base station (BS#5) further includes a registration processing unit which is arranged to perform registration processing requested by the terminal (MS), and
the terminal (MS) further includes a registration processing unit which is arranged to execute a registration procedure to the radio base station (BS#5), and completion of the registration procedure by the terminal induces the registration processing unit of the radio base station to transmit the advertisement message (MOB_NBR-ADV) and the handover request message to the terminal.

3. The radio communication system according to Claim 1, wherein
the radio base station (BS#5) further includes a first information table in which the channel information of the second radio base station (BS-X, BS-Y) has been registered in advance, and
the advertisement message generation unit is arranged to generate the advertisement message (MOB_NBR-ADV) with reference to the first information table.

4. The radio communication system according to Claim 1, wherein
the radio base station (BS#5) further includes:
a list registration unit which is arranged to register information on the terminal (MS) in a history list when communication with the terminal is disconnected, and register information of the second radio base station (BS-X, BS-Y) in the history list if the terminal completes the handover to the second radio base station; and
a radio base station detection unit which is arranged to register the information of the second radio base station (BS-X, BS-Y) in a first information table if the number of the terminals which completed the handover to the second radio base station exceeds a threshold with reference to the history list, and
the advertisement message generation unit is arranged to generate the advertisement message (MOB_NBR-ADV) with reference to the first information table.

5. The radio communication system according to Claim 4, wherein
the list registration unit includes a registration processing unit and a first radio base station side handover processing unit;
the registration unit is arranged to register at least an identifier of the terminal (MS) in the history list, if detection is made that the communication with the terminal is disconnected, and
the first radio base station handover processing unit is arranged to register at least an identifier of the second radio base station (BS-X, BS-Y) in the history list, if a handover completion notice (HO Complete) on the terminal is received from the second radio base station.

6. The radio communication system according to Claim 4, wherein
the list registration unit includes a first radio base station side handover processing unit which is arranged to receive the handover completion notice (HO Complete) on the terminal from the second radio base station (BS-X, BS-Y), and arranged to register information of the terminal and the second radio base station in the history list only for a predetermined time period.

7. The radio communication system according to Claim 1, wherein
the radio base station (BS#5) further includes a second radio base station side handover processing unit which is arranged to transmit registration and communication parameters for the terminal (MS) to the second radio base station (BS-X, BS-Y) via a backbone network in which the radio base station and the second radio base station are connected, when the handover request message is transmitted from the transmission unit, and
the registration procedure is omitted because of the communication parameters, when handover registration is performed between the terminal (MS) and the second radio base station (BS-X, BS-Y).

8. The radio communication system according to Claim 7, wherein
the handover registration between the terminal (MS) and the second radio base station (BS-X, BS-Y) refers to message exchange from initial ranging to registration, and the registration and communication parameters of the terminal are at least information included in the messages corresponding to each message exchange.

9. The radio communication system according to Claim 1, wherein
the terminal side handover processing unit is arranged to hold a handover request to the second radio base station (BS-X, BS-Y) by the handover request message (MOB_BSHO-REQ) from the radio base station when detection is made that handover to the second radio base station is not possible, and to execute the handover to the second radio base station using the channel information when the terminal detects the handover to the second radio base station is possible.

10. The radio communication system according to Claim 9, wherein the terminal side handover processing unit is arranged to detect whether the handover to the second radio base station is possible by measuring field strength from the second radio base station.

11. A radio base station (BS#5) for performing radio communication with a terminal (MS), comprising:
an advertisement message generation unit (23) which is arranged to generate an advertisement message (MOB_NBR-ADV) including both channel information of a first radio base station (BS#1 - BS#4) having a cell range directly adjacent to a cell range, which is an arrival range of radio waves of the radio base station (BS#5), and channel information of a second radio base station (BS-X, BS-Y); and
a transmission unit (20) which is arranged to transmit the advertisement message (MOB_NBR-ADV) to the terminal (MS);
**characterised in that**
the advertisement message generation unit (23) is arranged to generate the advertisement message (MOB_NBR-ADV) including channel information of the second base station (BS-X, BS-Y) having a cell range adjacent to the cell range of the radio base station (BS#5) with a non-arrival area of radio waves intervening therebetween, and **in that**
the radio base station further includes a handover request message generation unit (24) which is arranged to generate a handover request message (MOB_BSHO-REQ) including a handover instruction to the second radio base station (BS-X, BS-Y), the transmission unit (20) being further arranged to transmit the handover request message (MOB BSHO-REQ) to the terminal (MS).

12. A radio base station switching method in a radio communication system, in which a radio communication is performed between a radio base station and a terminal, the method comprising:
generating an advertisement message (MOB_NBR-ADV) including both channel information of a first radio base station (BS#1 - BS#4) having a cell range directly adjacent to a cell range, which is an arrival range of radio waves, of the radio base station, and channel information of a second radio base station (BS-X, BS-Y), and transmitting the advertisement message (MOB_NBR-ADV) to the terminal, in the radio base station;
receiving the advertisement message (MOB_NBR-ADV) in the terminal; and
detecting whether a handover to the second radio base station is possible, and performing the handover to the second radio base station using the channel information of the second radio base station included in the advertisement message (MOB_NBR-ADV) if the handover is possible, in the terminal; **characterised by**
in said generating an advertisement message (MOB_NBR-ADV), the second radio base station (BS-X, BS-Y) having a cell range adjacent to the cell range of the radio base station with a non-arrival area of radio waves intervening therebetween; and by the method further comprising:
generating a handover request message (MOB_BSHO-REQ) including a handover instruction to the second radio base station (BS-X, BS-Y), and transmitting the handover request message to the terminal (MS), in the radio base station;
and in said receiving, receiving the handover request message (MOB_BSHO-REQ) in the terminal (MS).

13. A mobile terminal (MS) for performing radio communication with a radio base station (BS#5), comprising:
a receive unit (61) which receives an advertisement message (MOB_NBR-ADV) including both channel information of a first radio base station (BS#1 - BS#4) having a cell range directly adjacent to a cell range, which is an arrival range of radio waves of the radio base station (BS#5), and channel information of a second radio base station (BS-X, BS-Y); and
a terminal side handover processing unit which detects whether a handover to the second radio base station (BS-X, BS-Y) is possible, and performs the handover to the second radio base station, using the channel information of the second radio base station (BS-X, BS-Y) included in the advertisement message (MOB_NBR-ADV), if the handover is possible; **characterised in that**:
the receive unit is arranged to receive the advertisement message (MOB_NBR-ADV) including channel information of the second base station (BS-X, BS-Y) having a cell range adjacent to the cell range of the radio base station (BS#5) with a non-arrival area of radio waves intervening therebetween, and to receive a handover request message (MOB_BSHO-REQ) including a handover instruction to the second radio base station, the terminal side handover processing unit (51) being responsive to the handover request message.

## Patentansprüche

1. Funkkommunikationssystem, umfassend:
eine Funkbasisstation (BS#5); und
ein Endgerät (MS), wobei
das Funkkommunikationssystem so ausgelegt ist, dass es Funkkommunikation zwischen der Funkbasisstation (BS#5) und dem Endgerät (MS) durchführt;
die Funkbasisstation (BS#5) umfasst:
eine Ankündigungsnachrichten-Erzeugungseinheit (23), die so ausgelegt ist, dass sie eine Ankündigungsnachricht (MOB_NBR-ADV) erzeugt, die sowohl Kanalinformationen einer ersten Funkbasisstation (BS#1 - BS#4) mit einem Zellbereich direkt benachbart zu einem Zellbereich, der ein Ankunftsbereich von Funkwellen der Funkbasisstation (BS#5) ist, als auch Kanalinformationen einer zweiten Funkbasisstation (BS-X, BS-Y) umfasst; und
eine Sendeeinheit (20), die so ausgelegt ist, dass sie die Ankündigungsnachricht (MOB_NBR-ADV) an das Endgerät (MS) sendet,
das Endgerät (MS) umfasst:
eine Empfangseinheit (61), die so ausgelegt ist, dass sie die Ankündigungsnachricht (MOB_NBR-ADV) empfängt; und
eine endgeräteseitige Weitergabeverarbeitungseinheit (51), die so ausgelegt ist, dass sie erkennt, ob eine Weitergabe an die zweite Funkbasisstation (BS-X, BS-Y) möglich ist, und die Weitergabe an die zweite Funkbasisstation unter Verwendung der Kanalinformationen der zweiten Funkbasisstation durchführt, die in der Ankündigungsnachricht (MOB_NBR-ADV) enthalten sind, wenn die Weitergabe möglich ist; **dadurch gekennzeichnet, dass**
die zweite Basisstation (BS-X, BS-Y) einen Zellbereich benachbart zum Zellbereich der Funkbasisstation (BS#5) mit einem Nicht-Ankunftsbereich von Funkwellen dazwischen intervenierend aufweist, dadurch, dass
die Funkbasisstation ferner eine Weitergabeanforderungsnachrichten-Erzeugungseinheit (24) umfasst, die so ausgelegt ist, dass sie eine Weitergabeanforderungsnachricht (MOB_BSHO-REQ) erzeugt, die eine Weitergabeanweisung an die zweite Funkbasisstation (BS-X, BS-Y) umfasst, wobei die Sendeeinheit (20) ferner so ausgelegt ist, dass sie die Weitergabeanforderungsnachricht an das Endgerät (MS) sendet, und dadurch, dass
im Endgerät (MS) die Empfangseinheit (61) ferner so ausgelegt ist, dass sie die Weitergabeanforderungsnachricht (MOB_BSHO-REQ) empfängt, und die endgeräteseitige Weitergabeverarbeitungseinheit (51) auf die Weitergabeanforderungsnachricht anspricht.

2. Funkkommunikationssystem nach Anspruch 1, wobei
die Funkbasisstation (BS#5) ferner eine Registrierungsverarbeitungseinheit umfasst, die so ausgelegt ist, dass sie Registrierungsverarbeitung durchführt, die vom Endgerät (MS) angefordert wird, und
das Endgerät (MS) ferner eine Registrierungsverarbeitungseinheit umfasst, die so ausgelegt ist, dass sie eine Registrierungsprozedur für die Funkbasisstation (BS#5) ausführt, und der Abschluss der Registrierungsprozedur durch das Endgerät die Registrierungsverarbeitungseinheit der Funkbasisstation veranlasst, die Ankündigungsnachricht (MOB_NBR-ADV) und die Weitergabeanforderungsnachricht an das Endgerät zu senden.

3. Funkkommunikationssystem nach Anspruch 1, wobei
die Funkbasisstation (BS#5) ferner eine erste Informationstabelle umfasst, in welcher die Kanalinformationen der zweiten Funkbasisstation (BS-X, BS-Y) im Voraus registriert wurden, und
die Ankündigungsnachrichten-Erzeugungseinheit so ausgelegt ist, dass sie die Ankündigungsnachricht (MOB NBR-ADV) unter Bezugnahme auf die erste Informationstabelle erzeugt.

4. Funkkommunikationssystem nach Anspruch 1, wobei die Funkbasisstation (BS#5) ferner umfasst:
eine Listenregistrierungseinheit, die so ausgelegt ist, dass sie Informationen über das Endgerät (MS) in einer Verlaufsliste registriert, wenn die Kommunikation mit dem Endgerät abgebrochen wird, und Informationen der zweiten Funkbasisstation (BS-X, BS-Y) in der Verlaufsliste registriert, wenn das Endgerät die Weitergabe an die zweite Funkbasisstation abschließt; und
eine Funkbasisstationsdetektionseinheit, die so ausgelegt ist, dass sie die Informationen der zweiten Funkbasisstation (BS-X, BS-Y) in einer ersten Informationstabelle registriert, wenn die Anzahl der Endgeräte, welche die Weitergabe an die zweite Funkbasisstation abgeschlossen haben, eine Schwelle in Bezug auf die Verlaufsliste überschreitet, und
die Ankündigungsnachrichten-Erzeugungseinheit so ausgelegt ist, dass sie die Ankündigungsnachricht (MOB_NBR-ADV) unter Bezugnahme auf die erste Informationstabelle erzeugt.

5. Funkkommunikationssystem nach Anspruch 4, wobei
die Listenregistrierungseinheit eine Registrierungsverarbeitungseinheit und eine erste funkbasisstationsseitige Weitergabeverarbeitungseinheit umfasst;
die Registrierungseinheit so ausgelegt ist, dass sie mindestens eine Kennung des Endgeräts (MS) in der Verlaufsliste registriert, wenn erkannt wird, dass die Kommunikation des Endgeräts abgebrochen wird, und
die erste Funkbasisstations-Weitergabeverarbeitungseinheit so ausgelegt ist, dass sie mindestens eine Kennung der zweiten Funkbasisstation (BS-X, BS-Y) in der Verlaufsliste registriert, wenn eine Weitergabeabschlussmeldung (HO Complete) über das Endgerät von der zweiten Funkbasisstation empfangen wird.

6. Funkkommunikationssystem nach Anspruch 4, wobei
die Listenregistrierungseinheit eine erste funkbasisstationsseitige Weitergabeverarbeitungseinheit umfasst, die so ausgelegt ist, dass sie die Weitergabeabschlussmeldung (HO Complete) über das Endgerät von der zweiten Funkbasisstation (BS-X, BS-Y) empfängt, und so ausgelegt ist, dass sie Informationen des Endgeräts und der zweiten Funkbasisstation in der Verlaufsliste nur für eine vorbestimmte Zeitdauer registriert.

7. Funkkommunikationssystem nach Anspruch 1, wobei
die Funkbasisstation (BS#5) ferner eine zweite funkbasisstationsseitige Weitergabeverarbeitungseinheit umfasst, die so ausgelegt ist, dass sie Registrierungs- und Kommunikationsparameter für das Endgerät (MS) über ein Backbone-Netz, in welchem die Funkbasisstation und die zweite Funkbasisstation verbunden sind, an die zweite Funkbasisstation (BS-X, BS-Y) sendet, wenn die Weitergabeanforderungsnachricht von der Sendeeinheit gesendet wird, und
die Registrierungsprozedur aufgrund der Kommunikationsparameter unterlassen wird, wenn Weitergaberegistrierung zwischen dem Endgerät (MS) und der zweiten Funkbasisstation (BS-X, BS-Y) durchgeführt wird.

8. Funkkommunikationssystem nach Anspruch 7, wobei
sich die Weitergaberegistrierung zwischen dem Endgerät (MS) und der zweiten Funkbasisstation (BS-X, BS-Y) auf einen Nachrichtenaustausch von der Anfangsortung bis zur Registrierung bezieht, und die Registrierungs- und Kommunikationsparameter des Endgeräts wenigstens Informationen sind, die in den Nachrichten enthalten sind, die jedem Nachrichtenaustausch entsprechen.

9. Funkkommunikationssystem nach Anspruch 1, wobei die endgeräteseitige Weitergabeverarbeitungseinheit so ausgelegt ist, dass sie eine Weitergabeanforderung an die zweite Funkbasisstation (BS-X, BS-Y) durch die Weitergabeanforderungsnachricht (MOB_BSHO-REQ) von der Funkbasisstation speichert, wenn erkannt wird, dass eine Weitergabe an die zweite Funkbasisstation nicht möglich ist, und die Weitergabe an die zweite Funkbasisstation unter Verwendung der Kanalinformationen ausführt, wenn das Endgerät erkennt, dass sie Weitergabe an die zweite Funkbasisstation möglich ist.

10. Funkkommunikationssystem nach Anspruch 9, wobei die endgeräteseitige Weitergabeverarbeitungseinheit so ausgelegt ist, dass sie durch Messen der Feldstärke von der zweiten Funkbasisstation erkennt, ob die Weitergabe an die zweite Funkbasisstation möglich ist.

11. Funkbasisstation (BS#5) zum Durchführen von Funkkommunikation mit einem Endgerät (MS), umfassend:
eine Ankündigungsnachrichten-Erzeugungseinheit (23), die so ausgelegt ist, dass sie eine Ankündigungsnachricht (MOB_NBR-ADV) erzeugt, die sowohl Kanalinformationen einer ersten Funkbasisstation (BS#1 - BS#4) mit einem Zellbereich direkt benachbart zu einem Zellbereich, der ein Ankunftsbereich von Funkwellen der Funkbasisstation (BS#5) ist, als auch Kanalinformationen einer zweiten Funkbasisstation (BS-X, BS-Y) umfasst; und
eine Sendeeinheit (20), die so ausgelegt ist, dass sie die Ankündigungsnachricht (MOB_NBR-ADV) an das Endgerät (MS) sendet;
**dadurch gekennzeichnet, dass**
die Ankündigungsnachrichten-Erzeugungseinheit (23) so ausgelegt ist, dass sie die Ankündigungsnachricht (MOB_NBR-ADV) erzeugt, welche Kanalinformationen der zweiten Funkbasisstation (BS-X, BS-Y) mit einem Zellbereich benachbart zum Zellbereich der Funkbasisstation (BS#5) mit einem Nicht-Ankunftsbereich von Funkwellen dazwischen intervenierend erzeugt, und dadurch, dass
die Funkbasisstation ferner eine Weitergabeanforderungsnachrichten-Erzeugungseinheit (24) umfasst, die so ausgelegt ist, dass sie eine Weitergabeanforderungsnachricht (MOB_BSHO-REQ) erzeugt, die eine Weitergabeanweisung an die zweite Funkbasisstation (BS-X, BS-Y) umfasst, wobei die Sendeeinheit (20) ferner so ausgelegt ist, dass sie die Weitergabeanforderungsnachricht (MOB_BSHO-REQ) an das Endgerät (MS) sendet.

12. Funkbasisstationswechselverfahren in einem Funkkommunikationssystem, in welchem eine Funkkommunikation zwischen einer Funkbasisstation und einem Endgerät durchgeführt wird, wobei das Verfahren umfasst:
Erzeugen einer Ankündigungsnachricht (MOB_NBR-ADV), die sowohl Kanalinformationen einer ersten Funkbasisstation (BS#1 - BS#4) mit einem Zellbereich direkt benachbart zu einem Zellbereich, der ein Ankunftsbereich von Funkwellen der Funkbasisstation ist, als auch Kanalinformationen einer zweiten Funkbasisstation (BS-X, BS-Y) umfasst; und Senden der Ankündigungsnachricht (MOB_NBR-ADV) an das Endgerät in der Funkbasisstation;
Empfangen der Ankündigungsnachricht (MOB_NBR-ADV) im Endgerät; und
Erkennen, ob eine Weitergabe an die zweite Funkbasisstation möglich ist, und Durchführen der Weitergabe an die zweite Funkbasisstation unter Verwendung der Kanalinformationen der zweiten Funkbasisstation, die in der Ankündigungsnachricht (MOB_NBR-ADV) enthalten sind, wenn die Weitergabe möglich ist, im Endgerät; **dadurch gekennzeichnet, dass**
beim Erzeugen einer Ankündigungsnachricht (MOB_NBR-ADV) die zweite Funkbasisstation (BS-X, BS-Y) einen Zellbereich benachbart zum Zellbereich der Funkbasisstation mit einem Nicht-Ankunftsbereich von Funkwellen dazwischen intervenierend aufweist; und dadurch, dass das Verfahren ferner umfasst:
Erzeugen einer Weitergabeanforderungsnachricht (MOB_BSHO-REQ), die eine Weitergabeanweisung an die zweite Funkbasisstation (BS-X, BS-Y) umfasst, und Senden der Weitergabeanforderungsnachricht an das Endgerät (MS) in der Funkbasisstation;
und Empfangen der Weitergabeanforderungsnachricht (MOB_BSHO-REQ) im Endgerät (MS) beim Empfangen.

13. Mobiles Endgerät (MS) zum Durchführen von Funkkommunikation mit einer Funkbasisstation (BS#5), umfassend:
eine Empfangseinheit (61), die eine Ankündigungsnachricht (MOB_NBR-ADV) empfängt, die sowohl Kanalinformationen einer ersten Funkbasisstation (BS#1 - BS#4) mit einem Zellbereich direkt benachbart zu einem Zellbereich, der ein Ankunftsbereich von Funkwellen der Funkbasisstation (BS#5) ist, als auch Kanalinformationen einer zweiten Funkbasisstation (BS-X, BS-Y) umfasst; und
eine endgeräteseitige Weitergabeverarbeitungseinheit, die erkennt, ob eine Weitergabe an die zweite Funkbasisstation (BS-X, BS-Y) möglich ist, und die Weitergabe an die zweite Funkbasisstation unter Verwendung der Kanalinformationen der zweiten Funkbasisstation (BS-X, BS-Y) durchführt, die in der Ankündigungsnachricht (MOB_NBR-ADV) enthalten sind, wenn die Weitergabe möglich ist; **dadurch gekennzeichnet, dass**
die Empfangseinheit so ausgelegt ist, dass sie die Ankündigungsnachricht (MOB_NBR-ADV) empfängt, welche Kanalinformationen der zweiten Funkbasisstation (BS-X, BS-Y) mit einem Zellbereich benachbart zum Zellbereich der Funkbasisstation (BS#5) mit einem Nicht-Ankunftsbereich von Funkwellen dazwischen intervenierend umfasst, und eine Weitergabeanforderungsnachricht (MOB_BSHO-REQ) empfängt, die eine Weitergabeanweisung an die zweite Funkbasisstation umfasst, wobei die endgeräteseitige Weitergabeverarbeitungseinheit (51) auf die Weitergabeanforderungsnachricht anspricht.

## Revendications

1. Système de communication radio, comprenant :
une station radio fixe (BS#S) ; et
un terminal (MS), dans lequel
le système de communication radio est agencé pour effectuer une communication radio entre la station radio fixe (BS#5) et le terminal (MS) ;
la station radio fixe (BS#5) incluant :
une unité de génération de message d'annonce (23) qui est agencée pour générer un message d'annonce (MOB_NBR-ADV) concernant à la fois des données de canal d'une première station radio fixe (BS#1 à BS#4) présentant une portée de la cellule immédiatement adjacente à une portée de cellule, qui est une portée d'arrivée d'ondes radioélectriques de la station radio fixe (BS#5), et des données de canal d'une seconde station radio fixe (BS-X , BS-Y) ; et
une unité de transmission (20) qui est agencée pour transmettre le message d'annonce (MOB_NBR-ADV) au terminal (MS),
le terminal (MS) incluant :
une unité de réception (61) qui est agencée pour recevoir le message d'annonce (MOB_NBR-ADV) ; et
une unité de traitement de transfert côté terminal (51) qui est agencée pour détecter si un transfert vers la seconde station radio fixe (BS-X, BS-Y) est possible, et pour effectuer un transfert vers la seconde station radio fixe, en utilisant les données de canal de la seconde station radio fixe incluses dans le message d'annonce (MOB_NBR-ADV), si le transfert est possible ; **caractérisé en ce que**
la seconde station radio fixe (BS-X, BS-Y) présente une portée de cellule adjacente à la portée de cellule de la station radio fixe (BS#5), une zone de non arrivée d'ondes radioélectriques étant située entre elles, **en ce que**
la station radio fixe comporte en outre une unité de génération de message de demande de transfert (24) qui est agencée pour générer un message de demande de transfert (MOB_B5HO-REQ) incluant une instruction de transfert vers la seconde station radio fixe (BS-X, BS-Y), l'unité de transmission (20) étant agencée en outre pour transmettre au terminal (MS) le message de demande de transfert, et **en ce que**
dans le terminal (MS), l'unité de réception (61) est agencée en outre pour recevoir le message de demande de transfert (MOB_BSHO-REQ), et l'unité de traitement de transfert côté terminal (51) réagit au message de demande de transfert.

2. Système de communication radio selon la revendication 1, dans lequel
la station radio fixe (BS#5) comporte en outre une unité de traitement d'enregistrement qui est agencée pour effectuer un traitement d'enregistrement demandé par le terminal (MS), et
le terminal (MS) comporte en outre une unité de traitement d'enregistrement qui est agencée pour exécuter une procédure d'enregistrement sur la station radio fixe (BS#5), et la fin de la procédure d'enregistrement par le terminal provoque la transmission au terminal par l'unité de traitement d'enregistrement de la station radio fixe du message d'annonce (MOB_NBR-ADV) et du message de demande de transfert.

3. Système de communication radio selon la revendication 1, dans lequel
la station radio fixe (BS#5) comporte en outre une première table de données dans laquelle les données de canal de la seconde station radio fixe (BS-X, BS-Y) ont été enregistrées à l'avance, et
l'unité de génération de message d'annonce est agencée pour générer le message d'annonce (MOB_NBR-ADV) en référence à la première table de données.

4. Système de communication radio selon la revendication 1, dans lequel
la station radio fixe (BS#5) comporte en outre :
une unité d'enregistrement de liste qui est agencée pour enregistrer des données concernant le terminal (MS) dans une liste historique lorsque la communication avec le terminal est déconnectée, et enregistrer des données concernant la seconde station radio fixe (BS-X, BS-Y) dans la liste historique si le terminal achève le transfert vers la seconde station radio fixe ; et
une unité de détection de station radio fixe qui est agencée pour enregistrer les données de la seconde station radio fixe (BS-X, BS-Y) dans une première table de données si le nombre de terminaux ayant achevé le transfert vers la seconde station radio fixe dépasse un seuil en référence à la liste historique, et
l'unité de génération de message d'annonce est agencée pour générer le message d'annonce (MOB_NBR-ADV) en référence à la première table de données.

5. Système de communication radio selon la revendication 4, dans lequel
l'unité d'enregistrement de liste comporte une unité de traitement d'enregistrement et une première unité de traitement de transfert côté station radio fixe ;
l'unité d'enregistrement est agencée pour enregistrer au moins un identifiant du terminal (MS) dans la liste historique, s'il a été détecté que la communication avec le terminal est déconnectée, et
la première unité de traitement de transfert de station radio fixe est agencée pour enregistrer au moins un identifiant de la seconde station radio fixe (BS-X, BS-Y) dans la liste historique, si un avis d'achèvement de transfert (HO Complete) sur le terminal est reçu depuis la seconde station radio fixe.

6. Système de communication radio selon la revendication 4, dans lequel
l'unité d'enregistrement de liste comporte une première unité de traitement de transfert côté station radio fixe qui est agencée pour recevoir l'avis d'achèvement de transfert (HO Complete) sur le terminal depuis la seconde station radio fixe (BS-X, BS-Y) et agencée pour enregistrer des données concernant le terminal et la seconde station radio fixe dans la liste historique seulement pendant une période de temps prédéterminée.

7. Système de communication radio selon la revendication 1, dans lequel
la station radio fixe (BS#5) comporte en outre une seconde unité de traitement de transfert côté station radio fixe qui est agencée pour transmettre à la seconde station radio fixe (BS-X, BS-Y) des paramètres d'enregistrement et de communication concernant le terminal (MS) par l'intermédiaire d'un réseau dorsal auquel la station radio fixe et la seconde station radio fixe sont connectées, lorsque le message de demande de transfert est transmis par l'unité de transmission, et
la procédure d'enregistrement est omise en raison des paramètres de communication, lorsque l'enregistrement de transfert est effectué entre le terminal (MS) et la seconde station radio fixe (BS-X, BS-Y).

8. Système de communication radio selon la revendication 7, dans lequel
l'enregistrement de transfert entre le terminal (MS) et la seconde station radio fixe (BS-X, BS-Y) se réfère à un échange de messages de la portée initiale à l'enregistrement, et les paramètres d'enregistrement et de communications du terminal sont au moins des données incluses dans les messages correspondant à chaque échange de messages.

9. Système de communication radio selon la revendication 1, dans lequel
l'unité de traitement de transfert côté terminal est agencée pour contenir une demande de transfert vers la seconde station radio fixe (BS-X, BS-Y) par le message de demande de transfert (MOB_BSHO-REQ) provenant de la station radio fixe lorsqu'il a été détecté que le transfert vers la seconde station radio fixe n'est pas possible, et pour effectuer le transfert vers la seconde station radio fixe en utilisant les données de canal lorsque le terminal détecte que le transfert vers la seconde station radio fixe est possible.

10. Système de communication radio selon la revendication 9, dans lequel l'unité de traitement de transfert côté terminal est agencée pour détecter si le transfert vers la seconde station radio fixe est possible en mesurant l'intensité du champ provenant de la seconde station radio fixe.

11. Station radio fixe (BS#5) pour effectuer une communication radio avec un terminal (MS), comprenant :
une unité de génération de message d'annonce (23) qui est agencée pour générer un message d'annonce (MOB_NBR-ADV) concernant à la fois des données de canal d'une première station radio fixe (BS#1 à BS#4) présentant une portée de la cellule immédiatement adjacente à une portée de cellule, qui est une portée d'arrivée d'ondes radioélectriques de la station radio fixe (BS#5), et des données de canal d'une seconde station radio fixe (BS-X , BS-Y) ; et
une unité de transmission (20) qui est agencée pour transmettre au terminal (MS) le message d'annonce (MOB_NBR-ADV) ;
**caractérisé en ce que**
l'unité de génération de message d'annonce (23) est agencée pour générer le message d'annonce (MOB_NBR-ADV) concernant des données de canal de la seconde station fixe (BS-X, BS-Y) présentant une portée de la cellule adjacente à la portée de cellule de la station radio fixe (BS#5), une zone de non arrivée d'ondes radioélectriques étant située entre elles, et **en ce que**
la station radio fixe comporte en outre une unité de génération de message de demande de transfert (24) qui est agencée pour générer un message de demande de transfert (MOB_BSHO-REQ) incluant une instruction de transfert vers la seconde station radio fixe (BS-X, BS-Y), l'unité de transmission (20) étant agencée en outre pour transmettre le message de demande de transfert (MOB_BSHO-REQ) au terminal (MS).

12. Procédé de commutation d'une station radio fixe dans un système de communication radio, dans lequel une communication radio est effectuée entre une station radio fixe et un terminal, le procédé comprenant :
la génération d'un message d'annonce (MOB_NBR-ADV) concernant à la fois des données de canal d'une première station radio fixe (BS#1 à BS#4) présentant une portée de la cellule immédiatement adjacente à une portée de cellule, qui est une portée d'arrivée d'ondes radioélectriques de la station radio fixe, et des données de canal d'une seconde station radio fixe (BS-X , BS-Y), et la transmission du message d'annonce (MOB_NBR-ADV) au terminal, dans la station radio fixe ;
la réception du message d'annonce (MOB_NBR-ADV) dans le terminal ; et
la détection du fait qu'un transfert vers la seconde station radio fixe est possible, et l'exécution du transfert vers la seconde station radio fixe, en utilisant les données de canal de la seconde station radio fixe incluses dans le message d'annonce (MOB_NBR-ADV), si le transfert est possible, dans le terminal ; **caractérisé en ce que**
dans ladite génération d'un message d'annonce (MOB_NBR-ADV), la seconde station radio fixe (BS-X, BS-Y) présente une portée de la cellule adjacente à la portée de cellule de la station radio fixe, une zone de non arrivée d'ondes radioélectriques étant située entre elles ; et **en ce que** le procédé comprend en outre :
la génération d'un message de demande de transfert (MOB_BSHO-REQ) incluant une instruction de transfert vers la seconde station radio fixe (BS-X, BS-Y), et la transmission du message de demande de transfert au terminal (MS), dans la station radio fixe ;
et dans ladite réception, la réception du message de demande de transfert (MOB_BSHO-REQ) dans le terminal (MS).

13. Terminal mobile (MS) pour effectuer une communication radio avec une station radio fixe (BS#5), comprenant :
une unité de réception (61) qui reçoit un message d'annonce (MOB_NBR-ADV) concernant à la fois des données de canal d'une première station radio fixe (BS#1 à BS#4) présentant une portée de la cellule immédiatement adjacente à une portée de cellule, qui est une portée d'arrivée d'ondes radioélectriques de la station radio fixe (BS#5), et des données de canal d'une seconde station radio fixe (BS-X , BS-Y) ; et
une unité de traitement de transfert côté terminal qui détecte si un transfert vers la seconde station radio fixe (BS-X, BS-Y) est possible, et effectue le transfert vers la seconde station radio fixe, en utilisant les données de canal de la seconde station radio fixe (BS-X , BS-Y) incluses dans le message d'annonce (MOB_NBR-ADV), si le transfert est possible ; **caractérisé en ce que**
l'unité de réception est agencée pour recevoir le message d'annonce (MOB_NBR-ADV) incluant des données de canal de la seconde station fixe (BS-X, BS-Y) présentant une portée de la cellule adjacente à la portée de cellule de la station radio fixe (BS#5), une zone de non arrivée d'ondes radioélectriques étant située entre elles, et pour recevoir un message de demande de transfert (MOB-BSHO-REQ) incluant une instruction de transfert vers la seconde station radio fixe, l'unité de traitement de transfert côté terminal (51) réagissant au message de demande de transfert.
